(19) Europäisches Patentamt
European Patent Office
Office européen des brevets

(11) **EP 1 772 254 A2**

(12) **EUROPEAN PATENT APPLICATION**

(43) Date of publication:
**11.04.2007 Bulletin 2007/15**

(51) Int Cl.:
**B29D 29/08** (2006.01)

(21) Application number: **06121599.2**

(22) Date of filing: **02.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.10.2005 US 243961**

(71) Applicant: **THE GOODYEAR TIRE & RUBBER COMPANY**
**Akron,**
**Ohio 44316-0001 (US)**

(72) Inventor: **Feldmann, Thomas Brian**
**Ohio, OH 45011 (US)**

(74) Representative: **Kutsch, Bernd**
**Goodyear S.A.,**
**Patent Department,**
**Avenue Gordon Smith**
**7750 Colmar-Berg (LU)**

(54) **Endless rubber track belt and method of curing the same**

(57)    A method is provided for curing an endless track belt (10) comprising the steps of providing an upper and lower heated mold assembly (A, B) having outer tread lug cavities in one half (110) of a mold assembly, inner guide lug cavities in the other half (112) of the mold assembly; placing a green uncured track belt carcass (11) in between the mold halves; closing the mold halves and heating the uncured track belt carcass in a first heat cycle; opening the mold halves and indexing the track belt a distance X; sliding one of the mold halves relative to the other mold half a distance t; and closing the mold halves and heating the track belt carcass in a second heat cycle. Also a mold (100) to perform this method and an endless rubber track (10) made using this method is disclosed.

FIG—6A

FIG—6B

## Description

<u>Field of the Invention</u>

This invention relates to an endless rubber track, a mold for forming such a track, and a method for the curing of large endless track belts.

<u>Background of the Invention</u>

The use of double platen presses for curing endless belts and conveyor belts is known from US-A-6,284,180. One typical disadvantage for endless belt molds is that the guide lug pitch and the tread lug pitch need to be equal or be a multiple of each other. In other words, the tread and lug pitch values are coupled due to the mold limitations. This is because the upper and lower mold platens are fixed in pitch length relative to each other. It is desirable to have the guide lug pitch and tread lug pitch decoupled, so that for example, the tread lugs have a slightly longer pitch than the guide lugs, resulting in better track performance.

<u>Summary of the Invention</u>

The invention provides in a first aspect a method for curing an endless track belt according to claim 1.

The invention provides in a second aspect a mold apparatus for forming an endless rubber track belt according to claim 6.

The invention provides in a third aspect an endless rubber track belt according to claim 5.

Dependent claims cover preferred embodiments of the invention.

<u>Brief Description of the Drawings</u>

Figure 1 is a perspective view of a prior art endless rubber track;

Figure 2 is a cross-sectional view of a section of the endless rubber track shown in Figure 1, taken in the direction 2-2;

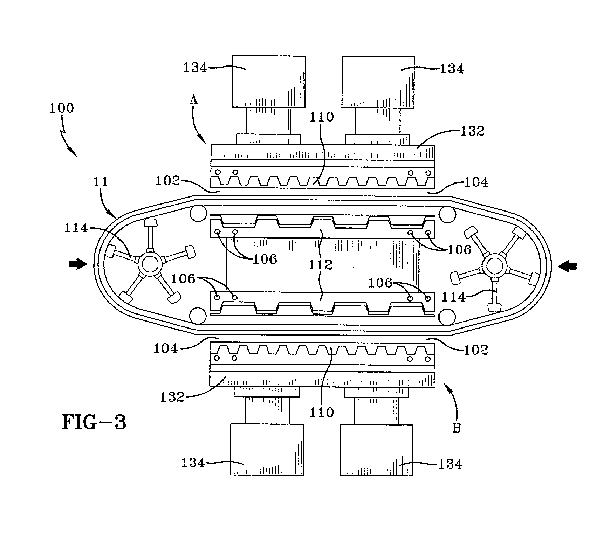

Figure 3 is an elevational cross-sectional view of an index curing mold apparatus;

Figure 4 illustrates the indexing of the track belt after the first heat cycle and preparation for the second heat cycle;

Figure 5 illustrates the mold assemblies closed during the second heat cycle.

Figure 6A is a schematic view illustrating only a portion of the track and the indexing of the mold in the first heat position;

Figure 6B is a schematic view illustrating only a portion of the track and the indexing of the mold in the second heat position, before the mold translation;

Figure 6C is a schematic view illustrating only a portion of the track and the indexing of the in the second heat position, after the mold translation; and

Figure 7 is a partial cross-sectional view illustrating a portion of the indexing mold.

<u>Detailed Description of the Invention</u>

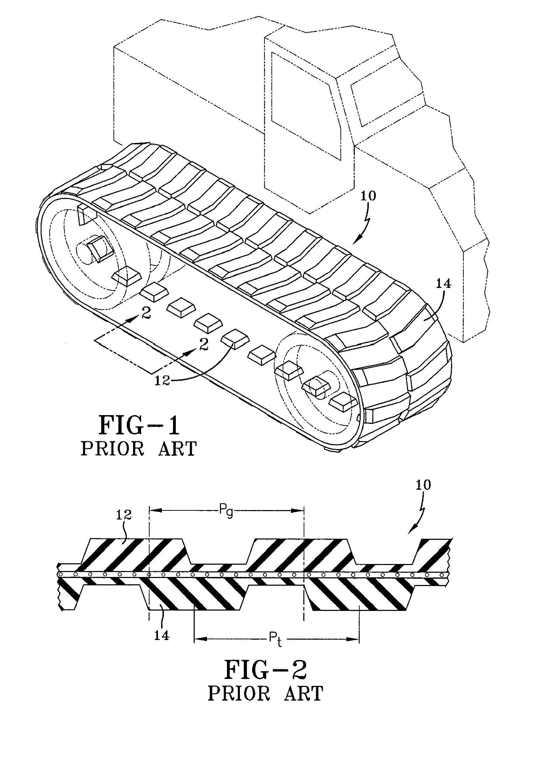

The invention comprises a method and apparatus for the curing of elastomeric endless track belts while allowing the tread pitch and the guide lug pitch to be independent of each other. Figure 1 illustrates a typical rubber endless track belt 10 having inner guide lugs 12 and outer rubber tread lugs 14. As shown in Figure 2, the tread lugs have a pitch Pt greater than the pitch of the guide lugs Pg. Prior art index cured tracks required that the lug pitch and guide pitch distances divide equally into the length of the track and into the index distance due to manufacturing limitations of the mold process. The invention as further described below, no longer requires that the lug pitch and guide pitch distances divide equally into the index distance, thus allowing that the guide lug and tread lug pitches to be selected independent of each other.

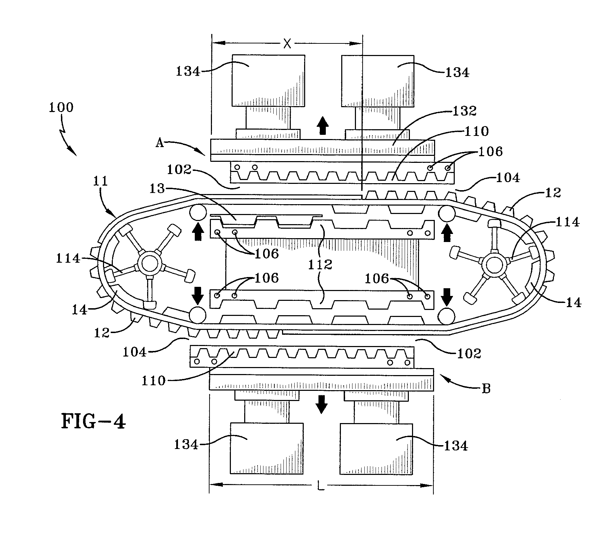

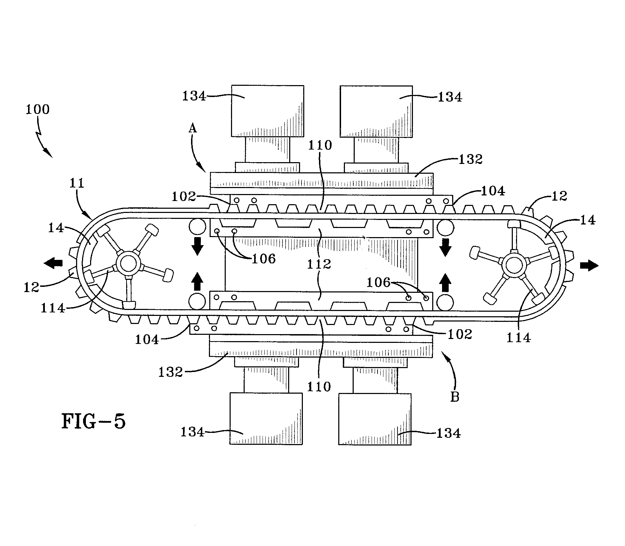

An index curing mold apparatus 100 suitable for use with the invention is shown in Figures 4-6. The mold apparatus includes a pair of upper A and lower B mold assemblies having entrance ends 102 and exit ends 104 with cooling water ports 106 at each end. There are outer tread lug cavities 110 on one-half of each of the mold assemblies and inner guide lug cavities 112 on the other mating half of the mold assemblies. At each opposing end of the mold assemblies are located fully supporting index wheels 114 which maintain an even tension across the width of the belt. The index wheels further index the tread belt a distance X in between mold cycle heats. The exit end cooling water ports 104 and the entrance end 102 cooling water ports are located such as to maintain a selected number of cavities below 100°C in order to prevent full vulcanization of the predetermined number of the guide lug cavities 112 and tread lug cavities 110.

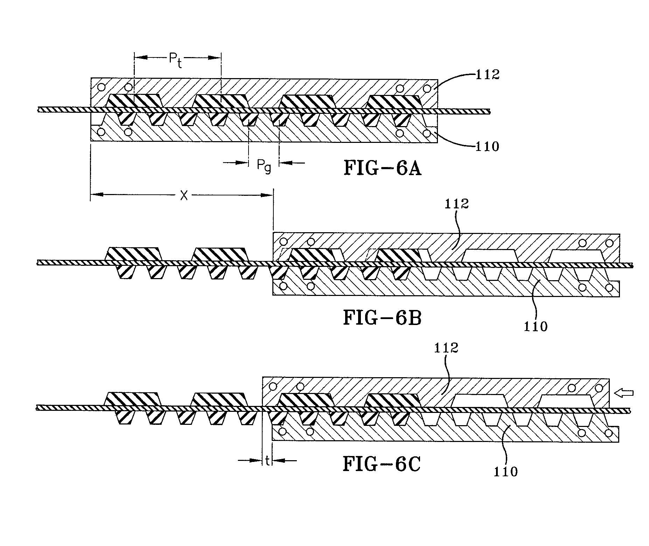

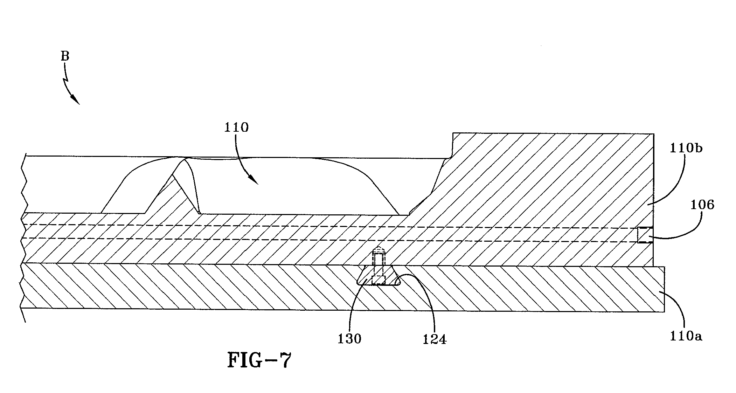

A unique feature of the mold subassembly of the present invention is that one of the mold halves translates relative to the mating mold half. For example, as shown in particular in figures 6 and 7, the mold half 110 translates relative to the mold half 112. As shown in Figure 7, the mold half 110 is divided into two sections: a bottom plate 110a which is stationary, and an upper plate 110b which translates. The bottom stationary plate has one or more grooves 124. The upper translating plate 110b has one or more rails 130 which are received in the grooves 124, allowing the upper translating plate 110b to translate relative to the lower stationary plate 110a. Alternatively, the upper translating plate 110b may have grooves while the lower stationary plate 110a has rails 130.

A green track belt carcass 11 similar to that disclosed in US-A- 5,211,609 and US-A- 5,575,729 generally having a longitudinal cable reinforcement is provided and placed around the indexing wheels 114 between the mold cavities 110 and 112. There are several ways to provide the compound for filling the tread lugs 14 and the guide lugs 12. Slugs of the compounds can be provided either as non-premolded extruded pieces which are cut to length, approximately the shape of the lug cross-sectional contour. At the ends they are cut on a bias to more approximate the ends of the cavities, or the slugs may be premolded similar to what is illustrated in US-A-5,536,464. Another way to provide lug compounds to the inner surface of the carcass or the outer surface of the carcass is to buildup the surface of the carcass with slab stock applied either as single pieces or as a continuous sheet of rubber repeatedly wrapped around either the inner or outer surface of the green belt.

With the green belt carcass 11 having a slab 13 of tread lug compound built-up thereon is between the mold halves, non-preformed slugs of inner guide lug compound are placed in the inner guide lug cavities of the upper mold assembly A and on the carcass opposite the guide lug cavities of the lower mold assembly B. Cooling water is turned on to both the exit end water ports and the entrance water ports. Curing is provided by platens 132 at temperatures of 95°C to 165°C. Pressure is provided by pressure cylinders 134 and pressure is applied in a series of bumps which may be defined by applying the pressure for a predetermined amount of time followed by releasing the pressure either to no pressure or a somewhat lower pressure than the initial high pressure. This bumping action goes to carefully form the outer tread lugs 14 and the inner guide lugs 12 while preventing distortion or damage to the lug compounds. Cavity pressure during this bumping action can range from 1.4 MPa to 8.4 MPa, while a range of 2 MPa to 3.3 MPa is preferred. Following the series of bumps, a constant lower pressure is applied to allow the lugs to expand into the cavities and to allow the molds to separate or gap in order to prevent the flow of the compound out of the ends of the mold. This lower pressure can range between 0.35 MPa to 1.3 MPa, while it is preferred that the range be between 0.5 MPa to 1 MPa. This pressure is maintained until the first heat is completed, resulting in the curing of the lugs which are in the central portion of the molds while those cavities which are in the cold regions, at the ends of the molds, are in various states of semi-vulcanization.

After the first heat is completed, the mold halves are separated and the belt is indexed an index distance X. The index distance X does not have to be a multiple of the tread lug pitch and the guide lug pitch. The index distance X may vary from between a and L-na, where a = the pitch length of the stationary lugs, L is the length of the mold and n is the number of pitches in the cold end. Prior to the second heat, the lower mold half is translated a distance t in order to align the lugs of the track with the mating lug section of the mold. The distance t is determined from the following equation:

$$t = X - P \cdot n$$

Where,

P = pitch of translating lugs
n = number of translating lugs being indexed

As shown in Figure 6, the lower mold half is translated forward a distance t in order to compensate for the difference in pitch of the guide lugs and the tread lugs. However, the invention would also work if the upper mold half was translated relative to the lower mold half. As such, the lugs which were formed in the cavities next to the cold end are aligned with the cavities at the cold exit end of the molds. At this point, the cooling water is shut off the exit ends of the molds in order to allow for the complete vulcanization of those lugs which were previously at the entrance end for the first heat. This condition is allowed to exist for the second to the final heat.

Additional slugs of guide lug compound are placed in the empty cavities of the upper molds and on the carcass opposite the empty cavities of the lower molds for each of the remaining heats. For the final heat, the semi-vulcanized lugs from the exit ends of the molds from the first heat are placed into the entrance cavities of the molds and the cooling water is turned off the entrance end cooling water ports in order to allow the completion of the vulcanization. Each heat provides the bumping action at the high pressure to form the lugs followed by the lower pressure for the completion of the cure cycle. This process has been found to prevent the flow of material out of the ends of the molds as well as to prevent the distortion of the reinforcement within the carcass of the belt. After the final heat, the finished track is removed from the mold assemblies.

As can be appreciated, when using non-preformed lugs for the outer tread, the lugs of the tread compound are placed on the carcass of the green track belt in the upper mold assembly and in the tread lug cavities of the lower mold assembly.

Example 1: The Tread Lug Mold is Translated

A 378 inch rubber track is to be cured in an indexing mold. As shown schematically in Figure 6, the track has a 6" pitch guide with a total of 63 guide lugs. The track has 58 tread lugs with a 6.52" tread pitch. The mold has a length of 102 inches. A portion of the track is cured in the mold during the first heat. The mold is opened and the track is indexed a distance X of 90 inches, although any multiple of the pitch guide may be used, for example, 12 inches, 18 inches, etc. Before the second heat begins, the lower mold half is slid or translated a distance t relative to the upper mold half. The distance T is determined by $t = X - (P n)$. In this example,

$$t = 90 - (6.52" *14).$$

$$t = -1.28"$$

Thus, the lower mold half is translated 1.28" inches in the reverse direction of the track rotational direction (towards the right in the figure) so that the tread lugs of the mold align with the tread lugs of the track.

Example 2: The Guide Lug Mold is Translated

A 252 inch rubber track is to be cured in an indexing mold. The track has a 6" pitch guide with a total of 42 guide lugs. The track has 40 tread lugs with a 6.3" tread pitch. The mold has a length of 44.1 inches. A portion of the track is cured in the mold during the first heat. The mold is opened and the track is indexed a distance X of 25.2 inches, although any multiple of the pitch tread may be used, for example, 12.6 inches, 18.9 inches, etc. Before the second heat begins, the upper mold half is slid or translated a distance t relative to the lower mold half. The distance t is determined by $t = X - Pn^*$
Where,

P = pitch of translating lugs
$n$ = number of translating lugs being indexed

In this example,

$$t = 25.2" - (6"*4)$$

$$t = 1.2"$$

The upper mold half is translated 1.2 inches towards forward (towards the left in the figure) so that the guide lugs of the mold align with the guide lugs of the track.
The number of pitches, n, should be chosen to minimize the distance t (i.e. in the example above, an n of 5 would result in a t of 4.8", which is several times larger than 1.2"). Minimizing t optimizes manufacturing efficiency by allowing for the longest mold length and longest index length X.

**Claims**

1. A method for curing an endless track belt comprising the steps of:

a) providing an upper and lower heatable mold assembly (A, B) having outer tread lug cavities in one half (110) of at least one of the upper and lower heatable mold assemblies (A, B), and inner guide lug cavities in the other half of the at least one upper and lower heatable mold assemblies (A, B);
b) placing a green uncured track belt carcass (11) in between the mold halves (110, 112);
c) closing the mold halves (110, 112) and heating the uncured track belt carcass (111) in a first heat cycle;
d) opening the mold halves (110, 112) and indexing the track belt (10) a distance X;
e) sliding one of the mold halves (110, 112) relative to the other mold half (110, 112) a distance t; and
f) closing the mold halves (110, 112) and heating the track belt carcass (11) in a second heat cycle.

2. The method of claim 1, wherein the distance t is determined from the equation t = X - Pn, where P is the pitch of translating lugs and n is the number of translations lugs being indexed.

3. The method of claim 1 or 2, wherein the lower mold half is translated relative to the upper mold half.

4. The method of claim 1 or 2, wherein the upper mold half is translated relative to the lower mold half.

5. An endless rubber track belt comprising an inner surface having inner lugs and an outer surface having outer lugs wherein the pitch of the inner lugs and the pitch of the outer lugs are not a multiple of the index distance.

6. A mold apparatus for forming an endless rubber track belt, the mold (100) comprising a lower mold half (110) and an upper mold half (112), wherein one of the mold halves (110, 112) translates relative to the other mold half.

FIG−1
PRIOR ART

FIG−2
PRIOR ART

FIG-3

FIG-4

FIG-5

EP 1 772 254 A2

FIG—6A

FIG—6B

FIG—6C

FIG-7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6284180 A
- US 5211609 A
- US 5575729 A
- US 5536464 A